# EUROPÄISCHE PATENTSCHRIFT

(11) **EP 2 188 159 B1**
(45) Veröffentlichungstag und Bekanntmachung des Hinweises auf die Patenterteilung: **04.01.2012**
(21) Anmeldenummer: 08785120.0
(22) Anmeldetag: 26.07.2008
(51) Int. Cl.: B60S 1/38

(54) **GERÄUSCHGEDÄMPFTES WISCHERBLATT FÜR EINEN SCHEIBENWISCHER AN EINEM FAHRZEUG**
NOISE-DAMPED WIPER BLADE FOR A WINDSHIELD WIPER OF A VEHICLE
BALAI D'ESSUIE-GLACE AVEC ATTÉNUATION DES BRUITS POUR UN ESSUIE-GLACE D'UN VÉHICULE

(30) Priorität: 16.08.2007 DE 102007038576
(43) Veröffentlichungstag der Anmeldung: 26.05.2010
(73) Patentinhaber: Volkswagen Aktiengesellschaft, 38436 Wolfsburg (DE)
(72) Erfinder: FANGMEIER, Wilhelm, 38442 Wolfsburg (DE)
(86) Internationale Anmeldenummer: PCT/EP2008/006169
(87) Internationale Veröffentlichungsnummer: WO 2009/021612

(56) Entgegenhaltungen:
- DE-A1- 19 524 108
- DE-A1- 19 609 578
- DE-A1-102005 045 411
- DE-U1- 9 104 461

## Beschreibung

Die Erfindung betrifft ein geräuschgedämpftes Wischerblatt für einen Scheibenwischer an einem Fahrzeug, insbesondere ein haltebügelloses/ gelenkfreies Wischerblatt für die Frontscheibe des Fahrzeugs.

Das Wischerblatt eines Scheibenwischers kann aus einer Wischleiste aus Gummi, einem federelastischen Tragelement und einem das Tragelement zumindest teilweise umschließenden formstabilen Hohlprofil und einer Anschlussvorrichtung für einen fahrzeugseitig angeordneten Scheibenwischerarm gebildet sein, wobei die Wischleiste ein Oberteil und ein mit diesem zumindest über einen Kippsteg verbundenes Unterteil mit einer Wischlippe zur Anlage an der Fahrzeugscheibe aufweist und das Hohlprofil in am Oberteil ausgebildete Längsnuten eingreift. Beim Betreiben eines Scheibenwischers wird die Wischlippe um den Kippsteg nach der jeweiligen Rückseite des über die Fahrzeugscheibe hin- und herbewegten Wischerblattes gekippt und am Bewegungs-Umkehrpunkt des Scheibenwischers nach der jeweils anderen, nun die Rückseite bildenden Seite umgelegt. Dieses Umlegen oder auch Umschlagen der Wischlippe ist mit einer störenden Geräuschentwicklung verbunden, die insbesondere durch ein Aufschlagen der jeweiligen Längskante des Unterteils auf das Oberteils im Bereich des Kippsteges hervorgerufen wird und einen hohen Geräuschpegel im Fahrzeug erzeugen kann.

Es sind bereits geräuschgedämpfte Wischleisten, insbesondere für haltebügellose/ gelenkfreies Wischerblätter, bekannt geworden, beispielsweise durch die DE 10 2005 009 205 A1, die DE 10 2005 045 411 A1, die DE 20 2004 020 356 U1 und die DE 10 2005 021 146 A1. Bei diesen Wischleisten sind in dem zwischen dem Oberteil, dem Unterteil und dem Kippsteg gebildeten Spalt Dämpfungsstege angeformt, die ein Anschlagen der jeweiligen Längskante des Unterteils auf die den Spalt mitbildende Fläche des Oberteils verhindern, zumindest jedoch erheblich dämpfen. Aus der DE 91 04 461 U1 ist es auch bekannt, zwischen dem Oberteil und dem Unterteil jeweils eine längserstreckte, das Querschnittsprofil der Wischleiste ergänzende und im spitzen Winkel zum Oberteil angeordnete Dämpfungsleiste aus dem Material der Wischleiste vorzusehen, die verhindert, dass die Längskante des Unterteils auf die dieser zugewandte Fläche des Oberteils aufschlägt, sondern bewirkt, dass die Längskante zunächst gegen die Dämpfungsleiste schlägt, die elastisch nachgibt und in Richtung der Fläche des Oberteils energieverzehrend deformiert und bis zur Anlage "auf Block" an diese Fläche gedämpft geschlagen wird. Die in den vorstehend genannten Dokumenten beschriebenen Maßnahmen zur Geräuschdämpfung beziehen sich auf die jeweilige Wischleiste des Wischerblattes. Die Wischleisten sind nur mit größerem Aufwand herzustellen.

Aufgabe der Erfindung ist es, ein geräuschgedämpftes Wischerblatt für einen Scheibenwischer an einem Fahrzeug nach dem Oberbegriff des Anspruchs 1 zu gestalten, bei dem die Geräuschdämpfung maximiert und aufwandsreduziert ist.

Diese Aufgabe wird bei einem Wischerblatt nach dem Oberbegriff des Anspruchs 1 durch dessen kennzeichnende Merkmale gelöst. Vorteilhafte Ausgestaltungen sind in den Unteransprüchen aufgeführt.

Die Erfindung betrifft ein Wischerblatt, das in bekannter Weise eine Wischleiste aus Gummi, ein federelastisches Tragelement und ein das Tragelement zumindest teilweise umschließendes Hohlprofil aufweist, wobei die Wischleiste ein Oberteil und ein mit diesem zumindest über einen Kippsteg verbundenes Unterteil mit einer Wischlippe aufweist. Das Hohlprofil ist unterteilseitig mit zwei Schenkeln versehen, die nach der Wischleiste zu abgewinkelt sind und mit den Abwinklungen in die Wischleiste eingreifen. Nach der Erfindung ist das Wischerblatt so gestaltet, dass die Abwinklungen im Bereich des Kippsteges in die Wischleiste eingreifen, und dass an den Schenkeln des Hohlprofils auf der dem Unterteil zugewandten Seite Dämpfungsmittel angeformt sind, insbesondere jeweils ein Dämpfungsstrang, der über die gesamte Längsausdehnung des jeweiligen Schenkels, zumindest jedoch über die Länge des Unterteils, erstreckt ist. Die Dämpfungsmittel verhindern, dass beim Betreiben des Scheibenwischers beim Umkehren der Bewegungsrichtung am jeweiligen Bewegungs-Umkehrpunkt des Wischerblattes, verbunden mit einem Umlegen der Wischleiste, die jeweilige oberteilseitige Längskante des Unterteils direkt gegen die unterteilseitige Fläche des jeweiligen Schenkels des Hohlprofils aus dem formstabilen und demzufolge harten Material schlägt, sondern gegen diese. Dabei sind die Dämpfungsmittel in einer solchen Dicke ausgebildet, dass der Aufschlag unter Aufnahme von Aufprallenergie erheblich gedämpft wird, wodurch die Aufschlag- bzw. Umlegegeräusche beseitigt, zumindest jedoch erheblich reduziert sind. Die als Dämpfungsmittel bevorzugt angeordneten Dämpfungsstränge können durch Anextrusion an das Hohlprofil und somit aufwandsreduziert mit diesem stoffschlüssig verbunden werden. Das Untergreifen des Oberteils bei Eingreifen der Schenkel in den Bereich des Kippsteges ist zudem mit dem Vorteil einer geringeren Höhe der Wischleiste verbunden, was deren Stabilität erhöht und mit einer Material- und Gewichtseinsparung verbunden sein kann.

Der Abstand der die an den Schenkeln des Hohlprofils angeordneten Dämpfungsstege vom Unterteil und dessen oberteilseitiger Längskante entspricht vorzugsweise maximal der Höhe des Kippsteges und ist minimal so gewählt, dass das Unterteil mit der Wischlippe bei einer Deformation des jeweiligen Dämpfungsstranges eine Schrägstellung von im Wesentlichen 45° gegenüber der Fahrzeugscheibe einnehmen kann. Durch diese Ausbildung ist sichergestellt, dass die vom Scheibenwischerarm auf das Wischerblatt aufgebrachte Anpresskraft auf die Fahrzeugscheibe übertragen und die Wischlippe unter 45° über die Fahrzeugscheibe gezogen werden kann.

Um diesen Abstand zwischen den Dämpfungssträngen und dem Unterteil herzustellen, ist es zweckmäßig, wenn das Oberteil kippstegseitig abgesetzt ist und die Schenkel mit den Dämpfungsmitteln das Oberteil in dem abgesetzten und dickenreduzierten äußeren Bereich hintergreifen.

Die Geräuschdämpfung des Wischerblattes kann noch verbessert, zumindest jedoch gestützt werden, wenn in der jeweils zwischen dem Oberteil, dem Kippsteg und dem Unterteil gebildeten längserstreckten Nut der Wischleiste in bekannter Weise Dämpfungsstege angeformt sind, was jedoch mit einem erhöhten Aufwand bezüglich der Wischleiste einhergeht. Die Dämpfungsstege können eine beliebige Gestalt aufweisen, sind jedoch vorzugsweise quer zur Längserstreckung der jeweiligen Nut im Abstand voneinander ausgebildet und sind vom Kippsteg nach außen bis im Wesentlichen zur Mitte der Nut erstreckt. Dabei können die Dämpfungsstege aus dem Material der Wischleiste oder einem Material mit einer geringeren Shore-Härte bestehen. Alternativ dazu können die Dämpfungstege kippstegseitig in Richtung der Längserstreckung der Nuten ausgebildet sein und aus einem Material mit einer wesentlich geringeren Shore-Härte als das Material der Wischleiste bestehen.

Die Erfindung wird nachstehend an einem Ausführungsbeispiel erläutert. In der zugehörigen Zeichnung zeigen:
- Fig. 1:: ein haltebügelloses Wischerblatt in einer Hauptansicht,
- Fig. 2:: dieses im Querschnitt II - II in der Ruhestellung an der Fahrzeugscheibe,
- Fig. 3:: dieses in einer Betriebsstellung im Querschnitt II - II und
- Fig. 4:: ein vergleichbares Wischerblatt nach dem Stand der Technik.

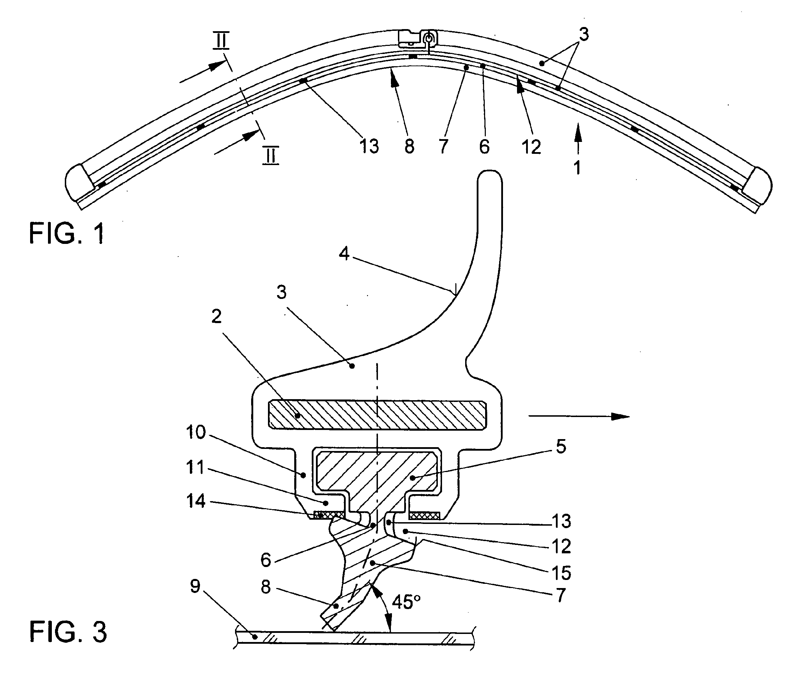

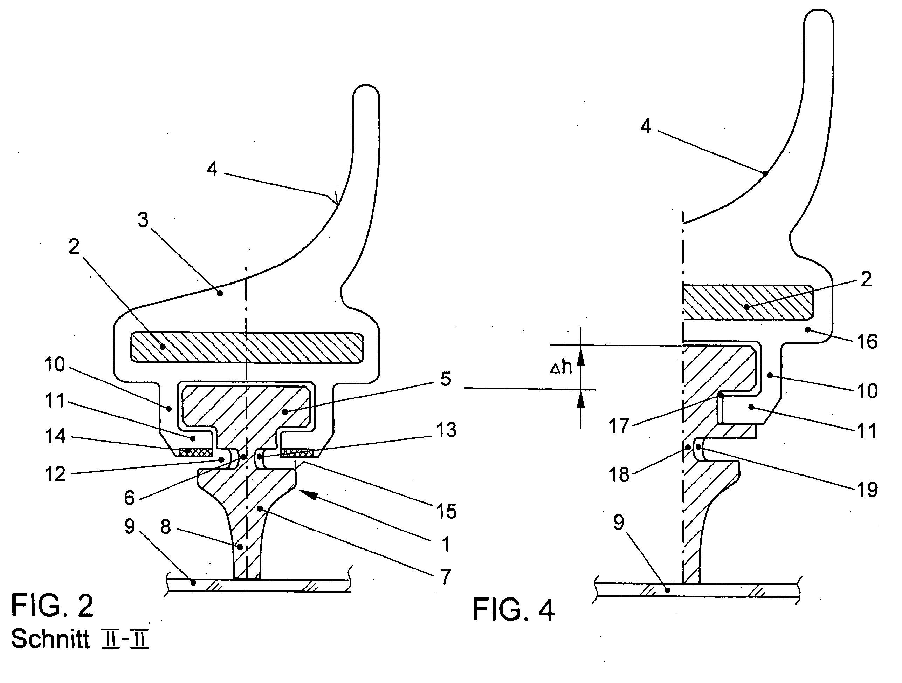

Das in den Fig. 1 bis 3 gezeigte Wischerblatt weist eine Wischleiste 1 aus Gummi, ein federelastisches Tragelement 2 (Fig. 2, 3) und ein dieses teilweise umschließendes formstabiles Hohlprofil 3 mit einem Windleitprofil 4 auf, wobei die Wischleiste 1 ein Oberteil 5 (Fig. 2, 3) und ein mit diesem über einen Kippsteg 6 verbundenes Unterteil 7 mit einer Wischlippe 8 zur Anlage an einer Fahrzeugscheibe 9 aufweist. Das Hohlprofil ist auf der Seite des Unterteils 7 mit zwei Schenkeln 10 versehen, die nach der Wischleiste 1 zu abgewinkelt sind und mit den Abwinklungen 11 in die durch das Oberteil 5, den Kippsteg 6 und das Unterteil 7 gebildeten längserstreckten Nuten 12 ein- und das Oberteil 5 hintergreifen und dadurch die Wischleiste 1 mit dem Tragelement 2 verbinden. Das Oberteil 5 ist dabei kippstegseitig abgesetzt, und die Schenkel 10 greifen in den abgesetzten und dickenreduzierten Bereich in das Oberteil 5 ein. In bekannter Weise sind in den Nuten 12 quer zu dieser und einander gegenüberliegend im regelmäßigen Abstand voneinander kippstegseitig Dämpfungsstege 13 aus dem Material der Wischleiste 1 angeformt, die nach außen bis im Wesentlichen zur Mitte der jeweiligen Nut 12 erstreckt sind. Die Schenkel 10 weisen unterteilseitig jeweils eine längserstreckte Ausnehmung auf, in die über deren gesamte Längserstreckung Dämpfungsstränge 14 aus einem Kunststoff-Weichschaum durch Anextrusion eingebracht und dabei mit dem Material des Hohlprofils 3 stoffschlüssig verbunden sind.

Der Abstand der Dämpfungsstränge 14 vom Unterteil 7 und dessen jeweiliger oberteilseitiger Längskante 15 entspricht im Wesentlichen der halben lichten Weite der Nut 12, und die Dicke der Dämpfungsstränge 14 ebenfalls der halben lichten Nutweite.

Fig. 3 zeigt das Wischerblatt in der Betriebsstellung bei einer Bewegung desselben in Richtung des Pfeiles, in der die Wischlippe 8 mit der Fahrzeugscheibe 9 einen (Schlepp-) Winkel von etwa 45° einnimmt. In dieser Betriebsstellung ist die Längskante 15 des Unterteils 7, die der Bewegungsrichtung entgegen ausgebildet ist, in den dieser zugeordneten Dämpfungsstrang 14 gedrückt und komprimiert diesen. Beim Umkehren der Bewegungsrichtung wird das Unterteil 7 umgelegt, und die in der Fig. 3 in der Bewegungsrichtung vordere Längskante 15 wird in den dieser zugeordneten Dämpfungsstrang 14 gedrückt, wobei der Dämpfungsstrang 14 unter Aufnahme von Aufprallenergie deformiert wird und verhindert, dass die Längskante 15 direkt gegen die unterteilseitige Fläche des Schenkels 10 schlägt und Umlegegeräusche erzeugt.

Fig. 4 zeigt ein Wischerblatt mit einer Wischleiste und einem vergleichbaren Hohlprofil 16, das jedoch keine Dämpfungsstränge aufweist, nach dem Stand der Technik. Es ist zu erkennen, dass das Hohlprofil 16 mit den an seinen beiden Schenkeln 10 ausgebildeten Abwinklungen 11 in eine Längsnut 17 im Oberteil eingreift, die oberhalb des Kippsteges 18 ausgebildet ist, in dem Dämpfungsstege 19 angeformt sind. Dieses Wischerblatt baut um etwa 15% höher auf der Fahrzeugscheibe 9 auf (Δh) als ein erfindungsgemäßes Wischerblatt nach den Fig. 1 bis 3. Damit sind die weiteren Vorteile des erfindungsgemäßen und am Fahrzeug angeordneten Wischerblattes, nämlich eine geringere Bauhöhe über der Fahrzeugscheibe, eine erhöhte Stabilität, insbesondere bei höheren Geschwindigkeiten, und eine Materialersparnis, verbunden mit einer Gewichtseinsparung, verdeutlicht.

### Bezugszeichenliste

- 1: Wischleiste
- 2: Tragelement
- 3: Hohlprofil
- 4: Windleitprofil
- 5: Oberteil
- 6: Kippsteg
- 7: Unterteil
- 8: Wischlippe
- 9: Fahrzeugscheibe
- 10: Schenkel
- 11: Abwinklung
- 12: Nut
- 13: Dämpfungssteg
- 14: Dämpfungsstrang
- 15: Längskante
- 16: Hohlprofil
- 17: Längsnut
- 18: Kippsteg
- 19: Dämpfungssteg
- Δh: Höhenunterschied

## Patentansprüche

1. Geräuschgedämpftes Wischerblatt für einen Scheibenwischer an einem Fahrzeug, mit einer Wischleiste, einem federelastischen Tragelement und einem das Tragelement zumindest teilweise umschließenden formstabilen Hohlprofil, wobei die Wischleiste ein Oberteil, ein mit diesem zumindest über einen Kippsteg verbundenes Unterteil mit einer Wischlippe zur Anlage an einer Fahrzeugscheibe und das Hohlprofil unterteilseitig zwei Schenkel aufweist, die nach der Wischleiste zu abgewinkelt sind und mit den Abwinklungen in diese eingreifen, und mit (Geräusch-) Dämpfungsmitteln aus einem Material, das eine wesentlich geringere Shore A-Härte als das Material der Wischleiste aufweist, **dadurch gekennzeichnet, dass** die Schenkel (10) im Bereich des Kippsteges (6) in die Wischleiste (1) eingreifen, und dass die Dämpfungsmittel (14) an den Schenkeln (10) des Hohlprofils (3) auf der dem Unterteil (7) zugewandten Seite angeordnet sind.

2. Wischerblatt nach Anspruch 1, **dadurch gekennzeichnet, dass** die Dämpfungsmittel durch jeweils einen an dem jeweiligen Schenkel (10) angeordneten und über dessen gesamte Längserstreckung, zumindest jedoch über die Länge des Unterteils (7), erstreckten Dämpfungsstrang (14) gebildet sind.

3. Wischerblatt nach Anspruch 1 oder 2, **dadurch gekennzeichnet, dass** die Dämpfungsmittel (14) mit dem Material des Hohlprofils (3) stoffschlüssig verbunden sind.

4. Wischerblatt nach Anspruch 3, **dadurch gekennzeichnet, dass** die Dämpfungsmittel (14) an das Material des Hohlprofils (3) anextrudiert sind.

5. Wischerblatt nach Anspruch 1, **dadurch gekennzeichnet, dass** der Abstand der Dämpfungsmittel (14) vom Unterteil (7) und dessen oberteilseitiger Längskante (15) maximal der Höhe des Kippsteges (6) entspricht und minimal so gewählt ist, dass die Wischlippe (8) bei einer Deformation des jeweiligen Dämpfüngsmittels 14 durch das Unterteil (7) eine Schrägstellung von im Wesentlichen 45° gegenüber der Fahrzeugscheibe (9) einnehmen kann.

6. Wischerblatt nach einem oder mehreren der vorhergehenden Ansprüche, **dadurch gekennzeichnet, dass** das Oberteil (5) kippstegseitig abgesetzt ist, und dass die Schenkel (10) mit den Dämpfungsmitteln (14) das Oberteil (5) in dem abgesetzten und dickenreduzierten Bereich hintergreifen.

7. Wischerblatt nach einem oder mehreren der vorhergehenden Ansprüche, **dadurch gekennzeichnet, dass** in der jeweils zwischen dem Oberteil (5), dem Kippsteg (6) und dem Unterteil (7) gebildeten längserstreckten Nut (12) Dämpfungsstege (13) angeformt sind.

8. Wischerblatt nach Anspruch 7, **dadurch gekennzeichnet, dass** die Dämpfungsstege (13) quer zur Längserstreckung der jeweiligen Nut (12) ausgebildet und vom Kippsteg (6) nach außen bis im Wesentlichen zur Mitte der Nut (12) erstreckt sind.

9. Wischerblatt nach Anspruch 8, **dadurch gekennzeichnet, dass** die Dämpfungsstege (13) in den Nuten (12) einander gegenüberliegend angeordnet sind.

10. Wischerblatt nach Anspruch 7, **dadurch gekennzeichnet, dass** die Dämpfungsstege (13) kippstegseitig in Richtung der Längserstreckung der Nuten (12) ausgebildet sind und eine wesentlich geringere Shore-Härte als das Material der Wischleiste aufweisen.

## Claims

1. Noise-damped wiper blade for a window wiper on a vehicle, with a wiper strip, a spring-elastic supporting element and a dimensionally stable hollow profile at least partially surrounding the supporting element, wherein the wiper strip has an upper part, and a lower part which is connected to the latter at least via a tilting web and has a wiper lip for bearing against a vehicle window, and the hollow profile has, on the lower-part side, two limbs which are angled towards the wiper strip and engage in the latter by means of the angled portions, and with (noise-)damping means composed of a material which has a substantially lower Shore A hardness than the material of the wiper strip, **characterized in that** the limbs (10) engage in the wiper strip (1) in the region of the tilting web (6), and **in that** the damping means (14) are arranged on the limbs (10) of the hollow profile (3) on the side facing the lower part (7).

2. Wiper blade according to Claim 1, **characterized in that** the damping means are formed by a damping strand (14) which is arranged on each limb (10) and extends over the entire longitudinal extent thereof, but at least over the length of the lower part (7).

3. Wiper blade according to Claim 1 or 2, **characterized in that** the damping means (14) are connected to the material of the hollow profile (3) with a cohesive material joint.

4. Wiper blade according to Claim 3, **characterized in that** the damping means (14) are extruded onto the material of the hollow profile (3).

5. Wiper blade according to Claim 1, **characterized in that** the distance of the damping means (14) from the lower part (7) and that longitudinal edge (15) thereof which is on the upper-part side corresponds at maximum to the height of the tilting web (6) and at minimum is selected such that, upon deformation of the respective damping means (14) by the lower part (7), the wiper lip (8) can take up an oblique position of essentially 45° in relation to the vehicle window (9).

6. Wiper blade according to one or more of the preceding claims, **characterized in that** the upper part (5) is undercut on the tilting-web side, and **in that** the limbs (10) together with the damping means (14) reach behind the upper part (5) in the undercut and thickness-reduced region.

7. Wiper blade according to one or more of the preceding claims, **characterized in that** damping webs (13) are integrally formed in the longitudinally extending groove (12) which is formed in each case between the upper part (5), the tilting web (6) and the lower part (7).

8. Wiper blade according to Claim 7, **characterized in that** the damping webs (13) are formed transversely with respect to the longitudinal extent of the respective groove (12) and extend outwards from the tilting web (6) essentially as far as the centre of the groove (12).

9. Wiper blade according to Claim 8, **characterized in that** the damping webs (13) are arranged opposite each other in the grooves (12).

10. Wiper blade according to Claim 7, **characterized in that** the damping webs (13) are formed on the tilting-web side in the direction of the longitudinal extent of the grooves (12) and have a substantially lower Shore hardness than the material of the wiper strip.

## Revendications

1. Balai d'essuie-glace avec atténuation des bruits pour un essuie-glace raccordé à un véhicule, avec une baguette d'essuyage, un élément porteur élastique sur ressort et un profilé creux de forme stable entourant au moins en partie l'élément porteur, la baguette d'essuyage comportant une partie supérieure, une partie inférieure dotée d'une lèvre d'essuyage et reliée à la partie supérieure au moins par le biais d'un étai basculant, pour être placée contre une vitre de véhicule et le profilé creux comportant sur le côté inférieur deux côtés coudés après la baguette d'essuyage et dont les coudes s'engrènent dans ladite baguette et présentent des moyens d'amortissement du bruit réalisés à partir d'une matière présentant une dureté Shore A sensiblement plus réduite que la matière de la baguette d'essuyage, **caractérisé en ce que** les côtés (10) s'engrènent dans la baguette d'essuyage (1), dans la zone de l'étai basculant (6), et que les moyens d'amortissement (14) sont disposés sur le côté orienté vers la partie inférieure (7), au niveau des côtés (10) orientés vers le profilé creux (3).

2. Balai d'essuie-glace selon la revendication 1, **caractérisé en ce que** les moyens d'amortissement sont respectivement formés par une chaîne amortissante (14) disposée au niveau du côté (10) respectif et s'étendant sur l'ensemble de son extension longitudinale, toutefois au moins sur toute la longueur de la partie inférieure (7).

3. Balai d'essuie-glace selon la revendication 1 ou 2, **caractérisé en ce que** les moyens d'amortissement (14) sont reliés par complémentarité de matières au matériau du profilé creux (3).

4. Balai d'essuie-glace selon la revendication 3, **caractérisé en ce que** les moyens d'amortissement (14) sont extrudés au niveau du matériau du profilé creux (3).

5. Balai d'essuie-glace selon la revendication 1, **caractérisé en ce que** la distance entre les moyens d'amortissement (14) et la partie inférieure (7) et son arête longitudinale (15) située côté supérieur correspond au maximum à la hauteur de l'étai basculant (6) et est sélectionnée au minimum pour que la lèvre d'essuyage (8) puisse prendre, en présence d'une déformation du moyen d'amortissement 14 respectif à travers la partie inférieure (7), une position inclinée pour l'essentiel de 45° par rapport à la vitre de véhicule (9).

6. Balai d'essuie-glace selon l'une quelconque des revendications précédentes ou plusieurs d'entre elles, **caractérisé en ce que** la partie supérieure (5) est décalée du côté de l'étai basculant et que les côtés (10) emboîtent par l'arrière la partie supérieure (5) avec les moyens d'amortissement (14) dans la région décalée et d'épaisseur réduite.

7. Balai d'essuie-glace selon l'une quelconque des revendications précédentes ou plusieurs d'entre elles, **caractérisé en ce que** des étais amortissants (13) sont rattachés dans la rainure (12) s'étendant dans le sens de la longueur formées respectivement entre la partie supérieure (5), l'étai basculant (6) et la partie inférieure (7).

8. Balai d'essuie-glace selon la revendication 7, **caractérisé en ce que** les étais amortissants (13) sont réalisés transversalement à l'extension longitudinale de la rainure (12) respective et s'étendent de la passerelle basculante (6) jusque pour l'essentiel au milieu de la rainure (12), vers l'extérieur.

9. Balai d'essuie-glace selon la revendication 8, **caractérisé en ce que** les étais amortissants (13) sont disposés dans les rainures (12), à l'opposée les uns des autres.

10. Balai d'essuie-glace selon la revendication 7, **caractérisé en ce que** les étais amortissants (13) sont réalisés du côté de la passerelle basculante en direction de l'extension longitudinale des rainures (12) et comportent une dureté Shore pour l'essentiel plus réduite que celle du matériau de la baguette d'essuyage.
